# EUROPEAN PATENT APPLICATION

(11) **EP 3 840 086 A1**
(43) Date of publication of application: **23.06.2021**
(21) Application number: 19306748.5
(22) Date of filing: 20.12.2019
(51) Int. Cl.: H01M 4/04, H01M 4/134, H01M 4/1395, H01M 4/36, H01M 10/42

(54) **ALKALI METAL ELECTRODES AND METHODS FOR PREPARING THE SAME**

(71) Applicant: Arkema France, 92700 Colombes (FR); OXIS Energy Limited, Abingdon, Oxfordshire OX14 3DB (GB)
(72) Inventor: Lawton, Samuel, Abingdon, OX14 3DB (GB); Dibden, James, Abingdon, OX14 3DB (GB); Plée, Dominique, 92700 Colombes (FR)
(74) Representative: Bandpay & Greuter

(57) **Abstract**

The invention relates to a method for modifying an electrode comprising an alkali metal, comprising:
- casting a salt solution comprising at least one salt comprising an alkaline ion and a solvent on the electrode;
- casting a fluoropolymer solution comprising at least one fluoropolymer and a solvent on the electrode;
- drying the electrode;
- washing the electrode with a washing composition comprising a solvent.

The invention also relates to an electrode comprising an alkali metal at least partly covered by a solid electrolyte interphase, said solid electrolyte interphase having atomic ratios of carbon, fluorine and sulfur atoms of 1 C : 0.15 to 0.80 F: 0.02 to 0.30 S.

## Description

### Technical field

The present invention relates to modified electrodes based on an alkali metal, in particular based on lithium metal, and to methods for producing such electrodes.

### Technical background

Batteries based on lithium, such as lithium-ion batteries, are commonly used in electric vehicles and portable and mobile devices. In addition, lithium-sulfur batteries are promising due to their high specific energy.

Lithium metal negative electrodes for such lithium-based batteries are of particular interest because they have a high theoretical capacity (namely 3860 mAh.g⁻¹) and a low electrochemical potential (-3.04 V vs standard hydrogen electrode).

However, the use of lithium metal negative electrodes often leads to lithium dendrite formation on the negative electrode during lithium reduction. The presence of lithium dendrites on the negative electrode may result in a low coulombic efficiency, an increase in cell volume, an acceleration of the electrolyte decomposition and a thermal runaway.

In order to mitigate the formation of lithium dendrites, lithium negative electrodes coated with a PVDF (polyvinylidene fluoride) film have been developed.

The article by Gao et al., Protection of Li metal anode by surface-coating of PVDF thin film to enhance the cycling performance of Li batteries, Chinese Chemical Letters, vol. 30, No. 2, p.525-528 (2019) describes a lithium-metal anode comprising on its surface a porous PVDF film coating.

The article by Luo et al., High Polarity Poly(vinylidene difluoride) Thin Coating for Dendrite-Free and High-Performance Lithium Metal Anodes, Adv. Energy Mater., vol. 8, p. 1701482 (2017) describes a copper anode and a lithium anode coated with a thin film of a highly polar β-phase PVDF as an artificial solid electrolyte interphase (SEI).

However, PVDF spontaneously crystallizes into the non-polar α-phase. To obtain a film of PVDF crystallized in the polar β-phase, the PVDF has to be stretched or the film has to be prepared by slow evaporation of the solvent of the casting solution at a rather low temperature. Thus, this may lead to complex processes.

In addition, in lithium-sulfur batteries, the degradation of lithium metal by polysulfides occurs through a shuttle mechanism. This shuttle effect originates from the fact that high order polysulfides diffuse to the negative electrode side, where they react with lithium metal to form low order polysulfides, and diffuse back to the positive electrode side. Such shuttle effect causes the loss of sulfur material and lower the coulombic efficiency as well (Energy Environ. Sci., 2014, vol.7, p.347-353).

Fluorinated SEIs are known to provide benefits in terms of homogeneous Li⁺ stripping/deposition and higher ionic conductivity, to favor suppression of lithium dendrites and to improve safety. The article by Fan et al., Fluorinated solid electrolyte interphase enables highly reversible solid-state Li metal battery, Sci. Adv., vol. 4, No. 12, eaau9245 (2018) describes a LiF-rich SEI formed between a Li anode and a LPS solid-state electrolyte through coating/infiltrating LiFSI into the LPS.

There is a need for a protection for lithium metal electrodes making it possible to reduce the reduction of polysulfides (and thus the shuttle effect) and the formation of lithium dendrites and to produce batteries keeping a high coulombic efficiency and a long cell cycle life.

### Summary of the invention

It is a first object of the invention to provide a method for modifying an electrode comprising an alkali metal, comprising:
- casting a salt solution comprising at least one salt comprising an alkaline ion and a solvent on the electrode;
- casting a fluoropolymer solution comprising at least one fluoropolymer and a solvent on the electrode;
- drying the electrode;
- washing the electrode with a washing composition comprising a solvent.

In some embodiments, the at least one salt comprises at least one fluorine atom.

In some embodiments, the steps of casting a salt solution and of casting a fluoropolymer solution are carried out simultaneously, by casting a salt fluoropolymer solution comprising the at least one salt, the at least one fluoropolymer, and a solvent, on the electrode.

In some embodiments, the alkali metal of the electrode is sodium metal and the alkaline ion of the salt is a sodium ion.

In some embodiments, the alkali metal of the electrode is lithium metal and the alkaline ion of the salt is a lithium ion.

In some embodiments, the salt comprising a lithium ion is selected from the group consisting of LiFSI, LiTFSI, LiPF₆, LiDFOB, LiBOB, LiBF₄ and mixtures thereof, preferably the salt is LiFSI.

In some embodiments, the at least one fluoropolymer is selected from the group consisting of polyvinylidene fluoride homopolymers and copolymers comprising vinylidene fluoride units and units from one or more other monomers chosen from vinyl fluoride; trifluoroethylene; chlorotrifluoroethylene; 1,2-difluoroethylene, tetrafluoroethylene; bromotrifluoroethylene; chlorofluoroethylene; hexafluoropropylene; perfluoro(alkyl vinyl)ethers such as perfluoro(methyl vinyl)ether, perfluoro(ethyl vinyl)ether or perfluoro(propyl vinyl)ether; perfluoro(1,3-dioxole); perfluoro(2,2-dimethyl-1,3-dioxole); the product of formula CF₂=CFOCF₂CF(CF₃)OCF₂CF₂X in which X is SO₂F, CO₂H, CH₂OH, CH₂OCN or CH₂OPO₃H; the product of formula CF₂=CFOCF₂CF₂SO₂F; the product of formula F(CF₂)ₙCH₂OCF=CF₂ in which n is 1, 2, 3, 4 or 5; the product of formula R'CH₂OCF=CF₂ in which R' is hydrogen or F(CF₂)_{z} and z is 1, 2, 3 or 4; the product of formula R"OCF=CH₂ in which R" is F(CF₂)_{z} and z is 1, 2, 3 or 4; (perfluorobutyl)ethylene; tetrafluoropropene; chlorotrifluoropropene; pentafluoropropene; trifluoropropene such as 3,3,3-trifluoropropene and 2-trifluoromethyl-3,3,3-trifluoro-1-propene; preferably the fluoropolymer is selected from the group consisting of polyvinylidene fluoride homopolymers, poly(vinylidene fluoride-*co-*hexafluoropropylene), poly(vinylidene fluoride-*co*-trifluoroethylene), poly(vinylidene fluoride-*ter*-trifluoroethylene-*ter*-chlorofluoroethylene), poly(vinylidene fluoride-*ter*-trifluoroethylene-*ter*-chlorotrifluoroethylene), poly(vinylidene fluoride-*ter*-trifluoroethylene-*ter*-hexafluoropropylene) and mixtures thereof.

In some embodiments, the fluoropolymer is an electroactive polymer; preferably the fluoropolymer is a ferroelectric or a relaxor ferroelectric.

In some embodiments, the at least one fluoropolymer is a poly(vinylidene fluoride-trifluoroethylene and/or tetrafluoroethylene), preferably a poly(vinylidene fluoride-co-trifluoroethylene), having a molar content of vinylidene fluoride units of from 25 to 95 %, preferably from 55 to 80 %, and a molar content of trifluoroethylene and/or tetrafluoroethylene units of from 5 to 75 %, preferably from 20 to 45 %; or the at least one fluoropolymer is a poly(vinylidene fluoride-trifluoroethylene and/or tetrafluoroethylene-chlorofluoroethylene and/or chlorotrifluoroethylene), preferably a poly(vinylidene fluoride-*ter*-trifluoroethylene-*ter*-chlorofluoroethylene) or a poly(vinylidene fluoride-*ter*-trifluoroethylene-*ter-*chlorotrifluoroethylene), having a molar content of vinylidene fluoride units of from 25 to 80 %, preferably from 35 to 70 %, a molar content of trifluoroethylene and/or tetrafluoroethylene units of from 3 to 60 %, preferably from 14 to 40 %, and a molar content of chlorofluoroethylene and/or chlorotrifluoroethylene units of from 2 to 20 %, preferably from 3 to 15 %, more preferably from 4 to 12 %.

In some embodiments, the solvent of the salt solution is an ether, preferentially tetrahydrofuran, dimethoxyethane, dioxolane, diglyme, triglyme, tetraglyme and/or fluoro-ethers, even more preferably tetrahydrofuran; and/or the solvent of the fluoropolymer solution is an ether, preferably tetrahydrofuran, dimethoxyethane, dioxolane, diglyme, triglyme, tetraglyme and/or fluoro-ethers, even more preferably tetrahydrofuran; and/or the solvent of the washing composition an ether, preferably tetrahydrofuran, dimethoxyethane, dioxolane, diglyme, triglyme, tetraglyme and/or fluoro-ethers, even more preferably tetrahydrofuran.

In some embodiments, the casting steps are simultaneously or independently carried out by spin-coating, spray coating, bar coating, slot-die coating, dip coating, roll-to-roll printing, screen-printing, flexographic printing, lithographic printing, ink-jet printing, film stretching (such as the contactless Doctor-Blade method or the Meyer bar method with contact), preferably the casting steps are carried out by printing such as roll-to-roll printing, screen-printing, flexographic printing, lithographic printing or ink-jet printing;
and/or the casting steps are carried out so as to form a film having a total thickness lower than or equal to 3 µm, preferably lower than or equal to 1 µm, on the electrode after the drying of the electrode.

The invention also relates to an electrode obtainable by the method as described above.

The invention also relates to an electrode comprising an alkali metal at least partly covered by a solid electrolyte interphase, said solid electrolyte interphase having atomic ratios of carbon, fluorine and sulfur atoms of 1 C : 0.15 to 0.80 F: 0.02 to 0.30 S, preferably 1 C : 0.20 to 0.80 F : 0.02 to 0.30 S, more preferably of 1 C : 0.35 to 0.70 F : 0.03 to 0.25 S, more preferably of 1 C : 0.40 to 0.65 F : 0.04 to 0.22 S.

In some embodiments, the electrode is a negative electrode.

In some embodiments, the alkali metal is lithium or sodium, preferably lithium, more preferably the electrode is a film of lithium metal or of an alloy comprising lithium, even more preferably the electrode is a film of lithium metal.

The invention also relates to an electrochemical cell comprising a first electrode as described above, a second electrode, which is preferably a positive electrode, and an electrolyte.

The invention also relates to a battery comprising at least one electrochemical cell as described above.

The present invention enables to meet the abovementioned need. In particular the invention provides an alkali metal electrode protected by a solid electrolyte interphase that makes it possible to improve and extend the structural integrity of the electrode when said electrode is used in a battery, without impairing the coulombic efficiency and the cycle life of the battery. Indeed, the protected electrode according to the invention makes it possible to produce a battery with good coulombic efficiency, good cycle life and good capacity retention. In addition, when the electrode is used in a lithium-sulfur battery, chemical reduction of mobile polysulfide species at the anode/electrolyte can be limited. Moreover, in solid-state cells, the protected electrode of the invention can prevent reduction of the electrolyte at the interface with said electrode and enable the alkali metal electrode to be interfaced with solid-state electrolytes that would otherwise be chemically reduced. The protected electrode may enable a lower resistance interface, which is important for achieving performant solid-state batteries. In some embodiments, the protected electrode of the invention makes it possible to reduce, or even prevent, the formation of lithium dendrites on the electrode surface.

This is achieved by the presence of a solid electrolyte interphase having a specific proportion of carbon, sulfur and fluorine atoms on the electrode surface.

The invention also provides a simple method making it possible to obtain the protected electrode having the abovementioned advantages.

This is achieved by a particular sequence of steps that makes it possible to form a specific solid electrolyte interphase on the electrode surface, said particular sequence comprising casting a salt comprising an alkaline ion and a fluoropolymer in one or more solvents onto the electrode, drying the electrode and washing the electrode.

Without intending to be bound by any theory, the inventors assume that a chemical reaction occurs between the fluoropolymer, the salt and the alkali metal of the electrode on the surface of the electrode after the fluoropolymer and the salt are cast onto the electrode. The drying step makes it possible to remove the solvents and to form a film comprising the salt and the fluoropolymer on the electrode surface and the washing step makes it possible to remove the excess fluoropolymer and salt. In lithium-sulfur liquid systems, the presence of fluoropolymer on the electrode surface can lead to a rapid drop of coulombic efficiency that presumably results from an interaction between the fluoropolymer and the active material of the positive electrode. The removal of excess fluoropolymer by the washing step makes it possible to limit or prevent such an interaction and, therefore, to maintain a high coulombic efficiency.

### Brief description of the drawings

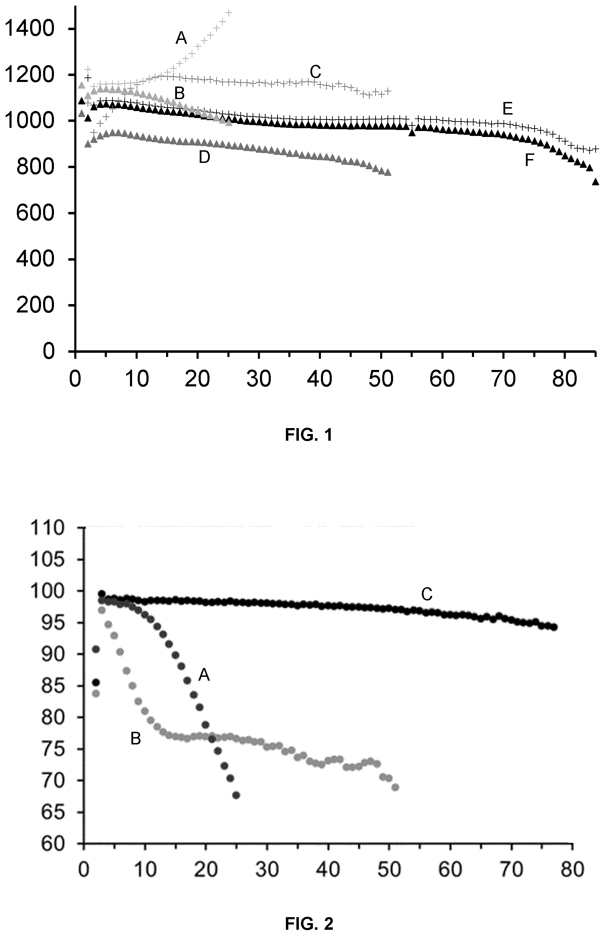

**Figure 1** shows the specific charge capacity and the specific discharge capacity (in mAh/g(sulfur)) (y-axis) of the cells described in example 1 as a function of the number of cycles (x-axis) of the cells. Curve A (light grey, symbol +) represents the charge capacity of the cell with electrode 1. Curve B (light grey, symbol Δ) represents the discharge capacity of the cell with electrode 1. Curve C (medium grey, symbol +) represents the charge capacity of the cell with electrode 2. Curve D (medium grey, symbol Δ) represents the discharge capacity of the cell with electrode 2. Curve E (black, symbol +) represents the charge capacity of the cell with electrode 3. Curve F (black, symbol Δ) represents the discharge capacity of the cell with electrode 3.
**Figure 2** shows the coulombic efficiency (in %) (y-axis) of the cells described in example 1 as a function of the number of cycles (x-axis) of the cells. Curve A (medium grey) represents the coulombic efficiency of the cell with electrode 1. Curve B (light grey) represents the coulombic efficiency of the cell with electrode 2. Curve C (black) represents the coulombic efficiency of the cell with electrode 3.

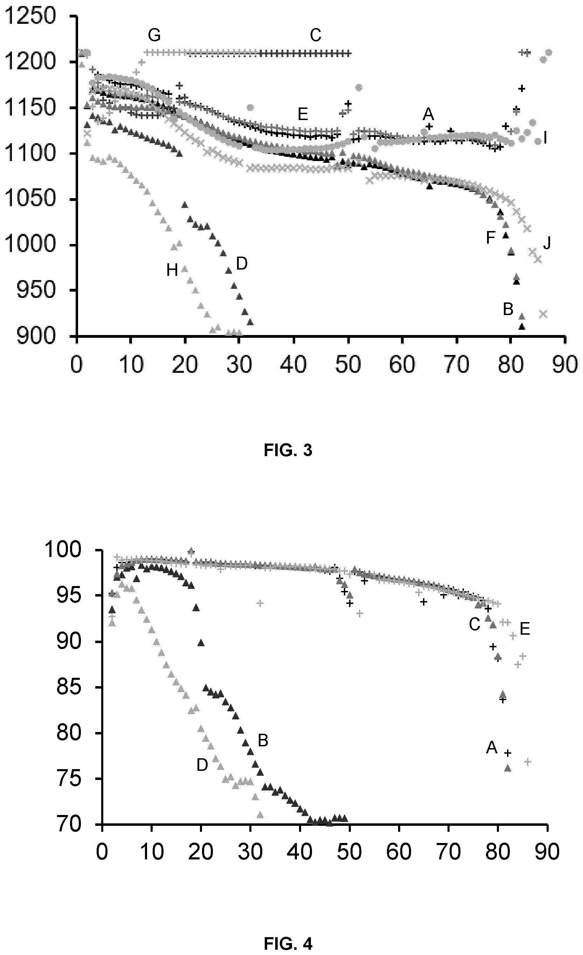

**Figure 3** shows the specific charge capacity and the specific discharge capacity (in mAh/g) (y-axis) of the cells described in example 3 as a function of the number of cycles (x-axis) of the cells. Curve A (black, symbol +) represents the charge capacity of the cell with electrode 1. Curve B (black, symbol Δ) represents the discharge capacity of the cell with electrode 1. Curve C (dark grey, symbol +) represents the charge capacity of the cell with electrode 3. Curve D (dark grey, symbol Δ) represents the discharge capacity of the cell with electrode 3. Curve E (medium grey, symbol +) represents the charge capacity of the cell with electrode 2. Curve F (medium grey, symbol Δ) represents the discharge capacity of the cell with electrode 2. Curve G (light grey, symbol +) represents the charge capacity of the cell with electrode 4. Curve H (light grey, symbol Δ) represents the discharge capacity of the cell with electrode 4. Curve I (light grey, symbol O) represents the charge capacity of the reference cell. Curve J (light grey, symbol x) represents the discharge capacity of the reference cell.
**Figure 4** shows the coulombic efficiency (in %) (y-axis) of the cells described in example 3 as a function of the number of cycles (x-axis) of the cells. Curve A (black, symbol +) represents the coulombic efficiency of the cell with electrode 1. Curve B (dark grey, symbol Δ) represents the coulombic efficiency of the cell with electrode 3. Curve C (medium grey, symbol Δ) represents the coulombic efficiency of the cell with electrode 2. Curve D (light grey, symbol Δ) represents the coulombic efficiency of the cell with electrode 4. Curve E (light grey, symbol +) represents the coulombic efficiency of the reference cell.
**Figure 5** shows the capacity retention (as the percentage of the BOL capacity) (y-axis) of the cells described in example 3 as a function of the number of cycles (x-axis) of the cells. Curve A (black, symbol +) represents the capacity retention of the cell with electrode 1. Curve B (dark grey, symbol Δ) represents the capacity retention of the cell with electrode 3. Curve C (light grey, symbol +) represents the capacity retention of the cell with electrode 2. Curve D (medium grey, symbol Δ) represents the capacity retention of the cell with electrode 4.
**Figure 6** shows an image of the negative electrode of the reference cell from the post-mortem analysis described in example 3. The scale bar represents 1 cm.
**Figure 7** shows an image of the positive electrode of the reference cell from the post-mortem analysis described in example 3. The scale bar represents 1 cm.
**Figure 8** shows an image of negative electrode 3 from the post-mortem analysis described in example 3. The scale bar represents 1 cm.
**Figure 9** shows an image of the positive electrode used in the cell comprising electrode 3 from the post-mortem analysis described in example 3. The scale bar represents 1 cm.
**Figure 10** shows an image of negative electrode 1 from the post-mortem analysis described in example 3. The scale bar represents 1 cm.
**Figure 11** shows an image of the positive electrode used in the cell comprising electrode 1 from the post-mortem analysis described in example 3. The scale bar represents 1 cm.
**Figure 12** shows an image of negative electrode 4 from the post-mortem analysis described in example 3. The scale bar represents 1 cm.
**Figure 13** shows an image of the positive electrode used in the cell comprising electrode 4 from the post-mortem analysis described in example 3. The scale bar represents 1 cm.
**Figure 14** shows an image of negative electrode 2 from the post-mortem analysis described in example 3. The scale bar represents 1 cm.
**Figure 15** shows an image of the positive electrode used in the cell comprising electrode 2 from the post-mortem analysis described in example 3. The scale bar represents 1 cm.

### Detailed description

The invention will now be described in more detail without limitation in the following description.

### Electrode covered by a SEI

In a first aspect, the invention relates to an electrode at least partly covered by a solid electrolyte interphase. Said electrode is suitable for being used in an electrochemical cell that is part of a battery.

An electrochemical cell comprises a negative electrode, a positive electrode and an electrolyte inserted between the negative electrode and the positive electrode. Electrochemical cells may also comprise a separator, which is soaked in the electrolyte.

By "*negative electrode*" is meant the electrode that serves as an anode when the battery is delivering current (*i.e*. during discharge of the battery) and that serves as a cathode during charge of the battery. The negative electrode typically comprises an electrochemically active material, optionally an electronically conductive material, optionally a current collector and optionally a binder.

By "*positive electrode*" is meant the electrode that serves as a cathode when the battery is delivering current (*i.e*. during discharge of the battery) and that serves as an anode during charge of the battery. The positive electrode typically comprises an electrochemically active material, optionally an electronically conductive material, optionally a current collector and optionally a binder.

By "*electrochemically active material*" is meant a material able to undergo a reversible reduction/oxidation process (*i.e*. able to react *via* an intercalation, alloying or conversion mechanism) within the operating voltages of the cell.

By "*electronically conductive material*" is meant a material able to conduct electrons.

The electrode according to the invention may be a negative electrode or a positive electrode and is preferably a negative electrode.

The electrode according to the invention comprises an alkali metal as an electrochemically active material. Preferably, the alkali metal is sodium and/or lithium. More preferably, the electrode comprises lithium. The electrode may comprise pure lithium metal and/or an alloy comprising lithium. The electrode may comprise or consist of a film of lithium metal. Alternatively, or additionally, the electrode may comprise or consist of a film of an alloy comprising lithium. As examples of alloys comprising lithium suitable for the electrode of the invention, mention can be made of LiₓAl, SiₓLi, SnₓLi, ZnₓLi, InₓLi, LiₓBi, LiₓCd, LiₓGe, LiₓPb, and LiₓSb alloys. For example, the film of lithium metal may be prepared by rolling of a lithium strip between rolls.

The electrode material may comprise, beside the electrochemically active material, an electronically conductive material such as carbon. The electronically conductive material may include carbon black, carbon Ketjen®, carbon Shawinigan, graphite, graphene, carbon nanotubes, carbon fibers (for example, carbon fibers formed in gaseous phase (or vapor grown carbon fibers (VGCF)), carbon in non-powder form obtained by carbonization of an organic precursor, or combinations (of two or more) thereof.

The electrode material may also comprise a binder. Non-limitative examples of binders include linear, branched and/or crosslinked polyether polymer binders (for example, polymers based on polyethylene oxide (PEO), or polypropylene oxide (PPO) or a mixture of both (or a copolymer EO/PO), optionally comprising crosslinkable units), water soluble binders (such as SBR (Styrene-butadiene rubber), NBR (Nitrile butadiene rubber), HNBR (hydrogenated NBR), CHR (epichlorohydrin rubber), ACM (acrylic rubber)), or binders of the fluorinated polymer type (such as PVDF (polyvinylidene fluoride), PTFE (polytetrafluoroethylene)), CMC (carboxymethylcellulose) and combinations thereof, such as a combination of one or more water soluble binders with CMC..

The electrode according to the invention is at least partly covered by a solid electrolyte interphase (SEI), said SEI having atomic ratios of carbon, fluorine and sulfur atoms of 1 C : 0.15 to 0.80 F : 0.02 to 0.30 S, preferably 1 C : 0.20 to 0.80 F : 0.02 to 0.30 S, more preferably 1 C : 0.30 to 0.80 F : 0.02 to 0.30 S, more preferably of 1 C : 0.35 to 0.70 F : 0.03 to 0.25 S, more preferably of 1 C ; 0.40 to 0.65 F : 0.04 to 0.22 S.

In some embodiments, the SEI may have the following atomic ratios of carbon, fluorine and sulfur atoms:

| **No.** | **Carbon** | **Fluorine** | **Sulfur** |
|---|---|---|---|
| 1 | 1 | 0.15 to 0.30 | 0.02 to 0.05 |
| 2 | 1 | 0.15 to 0.30 | 0.05 to 0.10 |
| 3 | 1 | 0.15 to 0.30 | 0.10 to 0.15 |
| 4 | 1 | 0.15 to 0.30 | 0.15 to 0.20 |
| 5 | 1 | 0.15 to 0.30 | 0.20 to 0.25 |
| 6 | 1 | 0.15 to 0.30 | 0.25 to 0.30 |
| 7 | 1 | 0.30 to 0.50 | 0.02 to 0.05 |
| 8 | 1 | 0.30 to 0.50 | 0.05 to 0.10 |
| 9 | 1 | 0.30 to 0.50 | 0.10 to 0.15 |
| 10 | 1 | 0.30 to 0.50 | 0.15 to 0.20 |
| 11 | 1 | 0.30 to 0.50 | 0.20 to 0.25 |
| 12 | 1 | 0.30 to 0.50 | 0.25 to 0.30 |
| 13 | 1 | 0.50 to 0.70 | 0.02 to 0.05 |
| 14 | 1 | 0.50 to 0.70 | 0.05 to 0.10 |
| 15 | 1 | 0.50 to 0.70 | 0.10 to 0.15 |
| 16 | 1 | 0.50 to 0.70 | 0.15 to 0.20 |
| 17 | 1 | 0.50 to 0.70 | 0.20 to 0.25 |
| 18 | 1 | 0.50 to 0.70 | 0.25 to 0.30 |
| 19 | 1 | 0.50 to 0.70 | 0.02 to 0.05 |
| 20 | 1 | 0.70 to 0.80 | 0.02 to 0.05 |
| 21 | 1 | 0.70 to 0.80 | 0.05 to 0.10 |
| 22 | 1 | 0.70 to 0.80 | 0.10 to 0.15 |
| 23 | 1 | 0.70 to 0.80 | 0.15 to 0.20 |
| 24 | 1 | 0.70 to 0.80 | 0.20 to 0.25 |
| 25 | 1 | 0.70 to 0.80 | 0.25 to 0.30 |

Preferably, the electrode is completely covered by said SEI. Preferably the different elements (carbon, fluorine and sulfur atoms) are homogeneously distributed.

The atomic proportions of carbon, sulfur and fluorine in the SEI may be measured by energy dispersive X-Ray spectroscopy (EDS).

By "*solid electrolyte interphase*" is meant a solid, inorganic and/or polymeric layer present on the surface of an electrode and intended to be in contact with the electrolyte. Typically and generally, an SEI is formed *in situ*, when the cell is operated, by decomposition products of the electrolyte that deposit onto the negative electrode, mainly during the first charge cycle. In the present invention, the SEI is preferably formed *ex situ* onto the electrode, i.e. an artificial SEI is formed onto the electrode before the electrode is put into contact with the electrolyte in the electrochemical cell.

Preferably, the SEI is made of a homogeneous material. Preferably, the SEI is continuous and non-porous.

Advantageously, the SEI has a thickness lower than or equal to 3 µm, preferably lower than or equal to 1 µm, such as from 0.01 to 1 µm. In some embodiments, the SEI has a thickness of from 0.01 to 0.05 µm, or from 0.05 to 0.1 µm, or from 0.1 to 0.2 µm, or from 0.2 to 0.3 µm, or from 0.3 to 0.4 µm, or from 0.4 to 0.5 µm, or from 0.5 to 0.6 µm, or from 0.7 to 0.8 µm, or from 0.8 to 0.9 µm, or from 0.9 to 1 µm, or from 1 to 1.5 µm, or from 1.5 to 2 µm, or from 2 to 2.5 µm, or from 2.5 to 3 µm. The thickness of the SEI can be measured by scanning electron microscopy (SEM).

### Process of surface electrode modification

In another aspect, the invention relates to a method for modifying an electrode comprising an alkali metal, comprising:
- casting a salt solution comprising at least one salt comprising an alkaline ion and a solvent on the electrode;
- casting a fluoropolymer solution comprising at least one fluoropolymer and a solvent on the electrode;
- drying the electrode;
- washing the electrode with a washing composition comprising a solvent.

The electrode may be as described above.

In a first variant, the salt solution is different from the fluoropolymer solution and said salt solution is casted on the electrode before the fluoropolymer is casted on the electrode. Such variant may make it possible to achieve a more homogeneous deposition of the salt and the fluoropolymer on the electrode.

In a second variant, the salt solution and the fluoropolymer solution form a single solution, called herein the "*salt fluoropolymer solution*". In this variant, the salt solution and the fluoropolymer solution are simultaneously casted on the electrode as they are one and the same solution. The solvent of the salt solution is thus the same as the solvent of the fluoropolymer solution, and it is also designated as the solvent of the salt fluoropolymer solution. According to said second variant, the method according to the invention preferably comprises:
- providing a salt fluoropolymer solution comprising at least one salt comprising an alkaline ion, at least one fluoropolymer and a solvent;
- casting the salt fluoropolymer solution on the electrode;
- drying the electrode;
- washing the electrode with a washing composition comprising a solvent.

In a third variant, the salt solution is different from the fluoropolymer solution and said salt solution is casted on the electrode after the fluoropolymer is casted on the electrode.

The salt comprising an alkaline ion preferably further comprises at least one fluorine atom. Advantageously, the alkaline ion is a lithium ion. Thus, in preferred embodiments, the salt may be any salt comprising a lithium (Li) ion and at least one fluorine atom. Some examples of suitable salts include LiFSI (lithium bis(fluorosulfonyl)imide), LiTFSI (lithium bis(trifluoromethanesulfonyl)imide), LiPF₆ (lithium hexafluorophosphate), LiDFOB (lithium difluoro(oxalato)borate), LiBOB (lithium bis(oxalato)borate), LiBF₄ (lithium tetrafluoroborate), and mixtures thereof. Preferably the salt is LiFSI and/or LiTFSI and more preferably it is LiFSI. Preferably, the alkaline ion of the salt is a lithium ion when the electrode comprises lithium metal.

The alkaline ion of the salt may also be a sodium ion. Preferably, the alkaline ion of the salt is a sodium ion when the electrode comprises sodium metal.

The solvent of the salt solution may be any solvent or combination of solvents that is not too aggressive to the alkali metal of the electrode (for example lithium metal). Preferably, the solvent is an ether. More preferably, the solvent is selected in the group consisting of tetrahydrofuran (THF), dimethoxyethane (DME), dioxolane (DOL), diglyme (bis(2-methoxyethyl) ether), triglyme (triethylene glycol dimethyl ether), tetraglyme (tetraethylene glycol dimethyl ether), fluoro-ethers and combinations thereof. Even more preferably, the solvent of the salt solution is tetrahydrofuran, most preferably anhydrous tetrahydrofuran.

Advantageously, the salt solution comprises from 0.01 to 5 % by weight, preferably from 0.1 to 3 % by weight, of the at least one salt comprising an alkaline ion. For example, the salt solution may comprise from 0.01 to 0.1 %, or from 0.1 to 0.2 %, or from 0.2 to 0.5 %, or from 0.5 to 1 %, or from 1 to 1.5 %, or from 1.5 to 2 %, or from 2 to 2.5 %, or from 2.5 to 3 %, or from 3 to 4 %, or from 4 to 5 %, by weight, of the at least one salt comprising an alkaline ion. When the salt solution and the fluoropolymer solution are a single solution, such as in the second variant, the abovementioned amounts may apply to the salt fluoropolymer solution.

The salt solution may essentially consist of, or consist of, the at least one salt comprising an alkaline ion (for example a salt comprising a lithium ion and at least one fluorine atom) and the solvent. Alternatively, the salt solution may comprise one or more additives, such as LiNO₃

The salt solution may be prepared by dispersing the salt, in a solid form, in the solvent and preferably by mixing. The temperature during the preparation of the salt solution may be from 0 to 80°C, preferably from 10 to 60°C, more preferably from 18 to 30°C, and is more preferably room temperature (*i.e*. a temperature of from 20 to 25°C). Preferably, the preparation is carried out under moderate stirring. When the salt solution comprises additives, they may be added before, during or after the dispersion of the salt in the solvent.

By "*fluoropolymer*" (or fluorinated polymer) is meant any polymer comprising at least one unit having at least one fluorine atom. The fluoropolymer may be a homopolymer or a copolymer. By "*copolymer*" is meant a polymer derived from the copolymerization of two or more monomers. Thus, the term copolymer in the context of the invention may include polymers derived from the polymerization of two monomers (also called bipolymers), polymers derived from the polymerization of three monomers (terpolymers) and polymers derived from the polymerization of four monomers (quaterpolymers).

The fluoropolymer may comprise within its backbone at least one unit from a monomer chosen among vinyl monomers containing at least one fluorine atom, vinyl monomers comprising at least one fluoroalkyl group and vinyl monomers comprising at least one fluoroalkoxy group. As an example, this monomer can be vinyl fluoride; vinylidene fluoride; trifluoroethylene (VF3); chlorotrifluoroethylene (CTFE); 1,2-difluoroethylene; tetrafluoroethylene (TFE); bromotrifluoroethylene; chlorofluoroethylene; hexafluoropropylene (HFP); a perfluoro(alkyl vinyl) ether such as perfluoro(methyl vinyl)ether (PMVE), perfluoro(ethyl vinyl) ether (PEVE) or perfluoro(propyl vinyl) ether (PPVE); perfluoro(1,3-dioxole); perfluoro(2,2-dimethyl-1,3-dioxole) (PDD); the product of formula CF₂=CFOCF₂CF(CF₃)OCF₂CF₂X in which X is SO₂F, CO₂H, CH₂OH, CH₂OCN or CH₂OPO₃H; the product of formula CF₂=CFOCF₂CF₂SO₂F; the product of formula F(CF₂)ₙCH₂OCF=CF₂ in which n is 1, 2, 3, 4 or 5; the product of formula R₁CH₂OCF=CF₂ in which R₁ is hydrogen or F(CF₂)ₘ and m is 1, 2, 3 or 4; the product of formula R₂OCF=CH₂ in which R₂ is F(CF₂)ₚ and p is 1, 2, 3 or 4; (perfluorobutyl)ethylene (PFBE); tetrafluoropropene; chlorotrifluoropropene; pentafluoropropene; trifluoropropene such as 3,3,3-trifluoropropene or 2-trifluoromethyl-3,3,3-trifluoro-1-propene. The fluorpolymer may comprise several units derived from the above monomers.

The fluoropolymer may also comprise units from non-fluorinated monomers like ethylene. However, preferably, the fluoropolymer does not contain any unit derived from non-fluorinated monomers. Preferably, the fluoropolymer consists of units from one or more monomers chosen among the abovementioned monomers.

In some embodiments, the fluoropolymer is electroactive, which means that it exhibits a change in size or shape when stimulated by an electric field (for example, it can contract, extend or bend under an electric field). It may be a ferroelectric, that is to say a material having in particular a dielectric permittivity peak as a function of temperature that depends on the frequency of the electric field. Alternatively, it may be a relaxor ferroelectric, that is to say a material having in particular a dielectric permittivity peak as a function of temperature that does not depend on the frequency of the electric field. Such a material may exhibit a weak coercive field (typically of less than 20 V/µm) and a weak remanent polarization (typically of less than 25 mC/m²).

Advantageously, the fluoropolymer is a polyvinylidene fluoride polymer. The polyvinylidene fluoride polymer may be a homopolymer.

The polyvinylidene fluoride polymer may alternatively be a copolymer comprising vinylidene fluoride units and units from one or more other monomers. Examples of other monomers are vinyl fluoride; trifluoroethylene; bromotrifluoroethylene; chlorofluoroethylene; chlorotrifluoroethylene (CTFE); 1,2-difluoroethylene, tetrafluoroethylene (TFE); hexafluoropropylene (HFP); perfluoro(alkyl vinyl)ethers such as perfluoro(methyl vinyl)ether (PMVE), perfluoro(ethyl vinyl)ether (PEVE) or perfluoro(propyl vinyl)ether (PPVE); perfluoro(1,3-dioxole); perfluoro(2,2-dimethyl-1,3-dioxole) (PDD); the product of formula CF₂=CFOCF₂CF(CF₃)OCF₂CF₂X in which X is SO₂F, CO₂H, CH₂OH, CH₂OCN or CH₂OPO₃H; the product of formula CF₂=CFOCF₂CF₂SO₂F; the product of formula F(CF₂)ₙCH₂OCF=CF₂ in which n is 1, 2, 3, 4 or 5; the product of formula R'CH₂OCF=CF₂ in which R' is hydrogen or F(CF₂)_{z} and z is 1, 2, 3 or 4; the product of formula R"OCF=CH₂ in which R" is F(CF₂)_{z} and z is 1, 2, 3 or 4; perfluorobutylethylene (PFBE); tetrafluoropropene; chlorotrifluoropropene; pentafluoropropene; trifluoropropene such as 3,3,3-trifluoropropene or 2-trifluoromethyl-3,3,3-trifluoro-1-propene.

The fluoropolymer may be a mixture of two or more of the abovementioned fluoropolymers.

Preferably the fluoropolymer is selected from the group consisting of polyvinylidene fluoride homopolymers, poly(vinylidene fluoride-*co-*hexafluoropropylene), poly(vinylidene fluoride-*co*-trifluoroethylene), poly(vinylidene fluoride-*ter*-trifluoroethylene-*ter*-chlorofluoroethylene), poly(vinylidene fluoride-*ter*-trifluoroethylene-*ter*-chlorotrifluoroethylene), poly(vinylidene fluoride-*ter*-trifluoroethylene-*ter*-hexafluoropropylene) and mixtures thereof.

The fluoropolymer may be a poly(vinylidene fluoride-trifluoroethylene and/or tetrafluoroethylene), preferably a poly(vinylidene fluoride-*co-*trifluoroethylene). Such fluoropolymers has preferably a molar content of vinylidene fluoride units of from 25 to 95 %, preferably from 55 to 80 %, such as from 25 to 35 %, or from 35 to 45 %, or from 45 to 55 %, or from 55 to 65 %, or from 65 to 80 %, or from 80 to 95 %; and/or a molar content of trifluoroethylene and/or tetrafluoroethylene units of from 5 to 75 %, preferably from 20 to 45 %, such as from 5 to 10 %, or from 10 to 20 %, or from 20 to 30 %, or from 30 to 45 %, or from 45 to 55 %, or from 55 to 65 %, or from 65 to 75 %.

The fluoropolymer may be a poly(vinylidene fluoride-trifluoroethylene and/or tetrafluoroethylene-chlorofluoroethylene and/or chlorotrifluoroethylene), preferably a poly(vinylidene fluoride-*ter*-trifluoroethylene-*ter*-chlorofluoroethylene) or a poly(vinylidene fluoride-*ter*-trifluoroethylene-*ter*-chlorotrifluoroethylene). Such fluoropolymers has preferably a molar content of vinylidene fluoride units of from 25 to 80 %, preferably from 35 to 70 %, such as from 25 to 35 %, or from 35 to 45 %, or from 45 to 55 %, or from 55 to 70 %, or from 70 to 80 %; and/or a molar content of trifluoroethylene and/or tetrafluoroethylene units of from 3 to 60 %, preferably from 14 to 40 %, such as from 3 to 5 %, from 5 to 10 %, from 10 to 14 %, from 14 to 20 %, or from 20 to 30 %, or from 30 to 40 %, or from 40 to 50 %, or from 50 to 60 %; and/or a molar content of chlorofluoroethylene and/or chlorotrifluoroethylene units of from 2 to 20 %, preferably from 3 to 15 %, more preferably from 4 to 12 %, such as from 2 to 3 %, or from 3 to 4 %, or from 4 to 5 %, or from 5 to 6 %, or from 6 to 7 %, or from 7 to 8 %, or from 8 to 9 %, or from 9 to 10 %, or from 10 to 12 %, or from 12 to 15 %, or from 15 to 18 %, or from 18 to 20 %.

The solvent of the fluoropolymer solution may be any solvent or combination of solvents that is not too aggressive to the alkali metal of the electrode (for example lithium metal). Preferably, the solvent is an ether. More preferably, the solvent is selected in the group consisting of tetrahydrofuran, dimethoxyethane, dioxolane, diglyme, triglyme, tetraglyme, fluoro-ethers and combinations thereof. Even more preferably, the solvent of the fluoropolymer solution is tetrahydrofuran, most preferably anhydrous tetrahydrofuran. The solvent of the fluoropolymer solution may be the same as that of the salt solution or may be different; preferably, the solvent of the fluoropolymer solution is the same as that of the salt solution. When the salt solution and the fluoropolymer solution are a single solution, such as in the second variant, the solvent of the salt fluoropolymer solution may be as described above, in particular said solvent is preferably an ether, more preferably selected from tetrahydrofuran, dimethoxyethane, dioxolane, diglyme, triglyme, tetraglyme, fluoro-ethers and combinations thereof, even more preferably tetrahydrofuran, most preferably anhydrous tetrahydrofuran.

The fluoropolymer solution may advantageously comprise from 0.01 to 5 % by weight, preferably from 0.1 to 3 % by weight, of the at least one fluoropolymer. For example, the fluoropolymer may be present in the fluoropolymer solution in an amount of from 0.01 to 0.1 %, or from 0.1 to 0.2 %, or from 0.2 to 0.5 %, or from 0.5 to 1 %, or from 1 to 1.5 %, or from 1.5 to 2 %, or from 2 to 2.5 %, or from 2.5 to 3 %, or from 3 to 4 %, or from 4 to 5 %, by weight. When the salt solution and the fluoropolymer solution are a single solution, such as in the second variant, the abovementioned amounts may apply to the salt fluoropolymer solution.

The fluoropolymer solution may essentially consist of, or consist of, the at least one fluoropolymer and the solvent. Alternatively, the fluoropolymer solution may comprise one or more additives, such as LiNO_{3.}

The fluoropolymer solution may be prepared by dispersing the fluoropolymer, in a solid form, in the solvent and preferably by mixing. The temperature during the preparation of the fluoropolymer solution may be from 0 to 80°C, preferably from 10 to 60°C, more preferably from 18 to 30°C, and is more preferably room temperature. Preferably, the preparation is carried out under moderate stirring. When the fluoropolymer solution comprises additives, they may be added before, during or after the dispersion of the fluoropolymer in the solvent.

The salt fluoropolymer solution may essentially consist of, or consist of, the at least one salt comprising an alkaline ion, the at least one fluoropolymer and the solvent. Alternatively, the salt fluoropolymer solution may comprise one or more additives, such as LiNO₃.

The salt fluoropolymer solution may be prepared by dispersing the salt and the fluoropolymer, in a solid form, in the solvent and preferably by mixing. The salt and the fluoropolymer may be dispersed simultaneously, or in any order. The temperature during the preparation of the salt fluoropolymer solution may be from 0 to 80°C, preferably from 10 to 60°C, more preferably from 18 to 30°C, and is more preferably room temperature. Preferably, the preparation is carried out under moderate stirring. When the salt fluoropolymer solution comprises additives, they may be added before, during or after the dispersion of the salt and the fluoropolymer in the solvent.

The casting of the solutions (such as the salt solution and the fluoropolymer solution, or the salt fluoropolymer solution) may independently be carried out by spin-coating, spray coating, bar coating, slot-die coating, dip coating, roll-to-roll printing, screen-printing, flexographic printing, lithographic printing, ink-jet printing, film stretching (such as the contactless Doctor-Blade method or the Meyer bar method with contact). The casting of the salt solution may be performed by the same casting process as the fluoropolymer solution, or by a different casting process. Preferably the casting step of the salt solution and/or of the fluoropolymer solution (or of the salt fluoropolymer solution) is carried out by printing, for example by roll-to-roll printing, screen-printing, flexographic printing, lithographic printing or ink-jet printing.

The casting steps (i.e. the casting of the salt solution and the casting of the fluoropolymer solution, or the casting of the salt fluoropolymer solution) are performed so that a layer of salt solution and fluoropolymer solution, or salt fluoropolymer solution, is formed on the electrode.

The electrode is then dried so that a film is formed on the electrode. The film is formed by the evaporation of the solvent(s).

Advantageously, the electrode is dried in a dry room. Preferably, the electrode is dried for a period of time of from 10 min to 5h, more preferably from 30 min to 2h, such as about 1h. Thus, the electrode may be dried for 10 to 30 min, or from 30 min to 1h, or from 1h to 1h30, or from 1h30 to 2h, or from 2h to 2h30, or from 2h30 to 3h, or from 3h to 3h30, or from 3h30 to 4h, or from 4h to 4h30, or from 4h30 to 5h, preferably in a dry room. Preferably, the drying step is carried out at a temperature of from 10 to 80°C, more preferably from 15 to 50°C, more preferably from 18 to 30°C. Advantageously, the drying step is carried out at room temperature, i.e. at a temperature of from 20 to 25°C. Preferably, the dry room has a dew point of from -60 to -30°C, more preferably from -50 to -40°C.

The film formed on the electrode after the drying step may have a thickness lower than or equal to 3 µm, preferably lower than or equal to 1 µm, such as from 0.01 to 1 µm. In some embodiments, the film has a thickness of from 0.01 to 0.05 µm, or from 0.05 to 0.1 µm, or from 0.1 to 0.2 µm, or from 0.2 to 0.3 µm, or from 0.3 to 0.4 µm, or from 0.4 to 0.5 µm, or from 0.5 to 0.6 µm, or from 0.6 to 0.7 µm, or from 0.7 to 0.8 µm, or from 0.8 to 0.9 µm, or from 0.9 to 1 µm, or from 1 to 1.5 µm, or from 1.5 to 2 µm, or from 2 to 2.5 µm, or from 2.5 to 3 µm. When the salt solution is casted separately from the fluoropolymer solution (such as in the first and third variants), the abovementioned thicknesses represent the total thickness of the film originating from both the salt solution and the fluoropolymer solution.

The electrode is then washed using a washing composition. This step makes it possible to remove the excess fluoropolymer and the excess salt.

The washing composition comprises a solvent. The solvent may be any solvent or combination of solvents that is not too aggressive to the alkali metal of the electrode (for example lithium metal). Preferably, the solvent is an ether. More preferably, the solvent is selected in the group consisting of tetrahydrofuran, dimethoxyethane, dioxolane, diglyme, triglyme, tetraglyme, fluoro-ethers and combinations thereof. Even more preferably, the solvent of the washing composition is tetrahydrofuran, most preferably anhydrous tetrahydrofuran. In some embodiments, the washing composition essentially consists of, or consists of, the solvent.

The electrode may be washed by soaking in a bath of washing composition. For example, the electrode may be soaked in the washing composition bath for from 1 min to 30 min, preferably from 2 min to 10 min, such as for about 5 min. Alternatively, or additionally, the electrode may be rinsed by the washing composition. The electrode may undergo one or more washings, with the same or different washing compositions. Preferably, the electrode is soaked in a bath of washing composition, for example for 2 to 10 min, and then rinsed with the washing composition. This provides a thorough and rapid washing.

Advantageously, the washing step is carried out no more than 10 days after the casting steps (i.e. after the casting of the salt solution and the casting of the fluoropolymer solution or the casting of the salt fluoropolymer solution), preferably no more than 5 days after the casting steps. Advantageously, the washing step is carried out at least 5 min after the casting steps. The washing step may be carried out from 5 min to 10 days after the casting of the salt solution and the casting of the fluoropolymer solution (or the casting of the salt fluoropolymer solution), preferably from 24h to 10 days after, more preferably from 5 to 8 days after, such as about 7 days. For example, the washing step may be carried out from 5 min to 1h, or from 1h to 5h, or from 5h to 10h, or from 10 to 24h, or from 24h to 2 days, or from 2 to 3 days, or from 3 to 4 days, or from 4 to 5 days, or from 5 to 6 days, or from 6 to 7 days, or from 7 to 8 days, or from 8 to 9 days, or from 9 to 10 days, after the casting steps. Preferably, the washing step is carried out no more than 10 days, preferably no more than 5 days, after the drying step. The washing step may be carried out from 1 s to 10 days after the drying step, preferably from 24h to 10 days after, preferably from 5 to 8 days after, such as about 7 days. For example, the washing step may be carried out from 1 s to 1 min, or from 1 to 5 min, or from 5 min to 1h, or from 1h to 5 h, or from 5h to 10h, or from 10 to 24h, or from 24h to 2 days, or from 2 to 3 days, or from 3 to 4 days, or from 4 to 5 days, or from 5 to 6 days, or from 6 to 7 days, or from 7 to 8 days, or from 8 to 9 days, or from 9 to 10 days, after the drying step. Advantageously, after being dried, the electrode is left to rest, for example for the abovementioned periods of time, before being washed. This allows the reaction between the salt, the fluoropolymer and the alkali metal (preferably lithium) of the electrode to occur in a sufficient extent. In some embodiments, the electrode is left at a temperature from 10 to 40°C, preferably from 15°C to 30°C, more preferably at room temperature. Alternatively or additionally, the electrode may be left to rest at a temperature above room temperature, such as above 30°C, or above 40°C (for the totality or for a part of the rest time). Heating the electrode at a temperature above room temperature may improve the reaction between the salt, the fluoropolymer and the alkali metal (preferably lithium) of the electrode.

After being washed, the electrode may be dried. This may allow to remove the washing composition from the electrode. The electrode may be dried in a dry room, for example in the same conditions as those described above.

Preferably, the washing solution retrieved after the washing step can be recycled. In particular, it can be used for a new casting procedure in order not to spend a valuable salt and polymer. This operation can be repeated at least ten times without loss of performance.

The invention also pertains to an electrode produced according to or obtainable by the method described above.

### Electrochemical cells and batteries

The invention also relates to an electrochemical cell comprising at least one electrode as described above. The electrochemical cell also comprises an electrolyte and may comprise another electrode, preferably a positive electrode.

The electrolyte may be liquid or solid.

The electrolyte may be composed of one or more alkaline salts, for example lithium salts, dissolved in a solvent or a mixture of solvent, optionally with one or more additives.

As non-limitative examples, the alkaline salt(s) (preferably lithium salt(s)) may be chosen from LiPF₆ (lithium hexafluorophosphate), LiFSI, LiTFSI, LiTDI (lithium 4,5-dicyano-2-(trifluoromethyl)imidazole), LiPOF₂, LiB(C₂O₄)₂, LiF₂B(C₂O₄)₂, LiBF₄, LiNO₃, LiClO₄ and combinations thereof. The concentration of the alkaline salt(s) in the electrolyte may at least 0.05 M and may be as high as the saturation concentration of the salt(s).

The solvent of the electrolyte may be chosen from the non-limitative list consisting of ethers, esters, ketones, alcohols, nitriles, sulfones and carbonates.

Among the ethers, mention can be made of the linear or cyclic ethers, such as for example dimethoxyethane, the methyl ethers of oligoethylene glycols having from 2 to 5 oxyethylene units, dioxolane, dioxane, dibutyl ether, tetrahydrofuran and mixtures thereof.

Among the esters, mention can be made of the phosphoric acid esters or the sulfite esters. Mention may be made of methyl formate, methyl acetate, methyl propionate, ethyl acetate, butyl acetate, gamma-butyrolactone and mixtures thereof.

Among the ketones, mention can be made of cyclohexanone.

Among the alcohols, mention can be made of ethyl alcohol, isopropyl alcohol and mixtures thereof.

Among the nitriles, mention can be made of acetonitrile, pyruvonitrile, propionitrile, methoxypropionitrile, dimethylaminopropionitrile, butyronitrile, isobutyronitrile, valeronitrile, pivalonitrile, isovaleronitrile, glutaronitrile, methoxyglutaronitrile, 2-methylglutaronitrile, 3-methylglutaronitrile, adiponitrile, malononitrile and mixtures thereof.

Among the carbonates, mention can be made of the cyclic carbonates such as for example ethylene carbonate (EC) (CAS : 96-49-1), propylene carbonate (PC) (CAS : 108-32-7), butylene carbonate (BC) (CAS : 4437-85-8), dimethyl carbonate (DMC) (CAS : 616-38-6), diethyl carbonate (DEC) (CAS : 105-58-8), ethyl methyl carbonate (EMC) (CAS : 623-53-0), diphenyl carbonate (CAS 102-09-0), methyl phenyl carbonate (CAS : 13509-27-8), dipropyl carbonate (DPC) (CAS : 623-96-1), methyl propyl carbonate (MPC) (CAS : 1333-41-1), ethyl propyl carbonate (EPC), vinylene carbonate (VC) (CAS : 872-36-6), fluoroethylene carbonate (FEC) (CAS : 114435-02-8), trifluoropropylene carbonate (CAS : 167951-80-6) and mixtures thereof.

The electrolyte may alternatively be a solid-state electrolyte. It may be any solid electrolyte that is ionically conductive and electronically insulating. Examples of solid electrolytes suitable for the invention include polymer-based electrolytes and ceramic-based electrolytes. The polymer-based electrolyte may be polyethylene oxide. As ceramic-based electrolytes, mention can be made of LLZO, LATP, LGPS, LPS and LAGP. The ceramic-based electrolyte may also be LiPON.

The electrode according to the invention may be used in cells based on various technologies such as lithium-air cells (or batteries), lithium-sulfur cells (or batteries), lithium-ion cells (or batteries) or sodium-ion cells (or batteries).

The other electrode, preferably a positive electrode, may comprise an electrochemically active material of the oxide type. It may be a lithium iron phosphate (LiₓFePO₄ with 0<x<1), or a lithium-nickel-manganese-cobalt composite oxide with a high content of nickel (LiNiₓMn_{y}Co_{z}O₂ with x+y+z = 1, abbreviated NMC, with x>y and x>z), or a lithium-nickel-cobalt-aluminum composite oxide with high content of nickel (LiNi_{x'}Co_{y'}Al_{z'} with x'+y'+z'=1, abbreviated NCA, with x'>y' and x'>z'). Particular examples of such oxides are NMC532 (LiNi_{0,5}Mn_{0,3}Co_{0,2}O₂), NMC622 (LiNi_{0,6}Mn_{0,2}Co_{0,2}O₂) and NMC811 (LiNi_{0,8}Mn_{0,1}Co_{0,1}O₂). Mixtures of these oxides may be used. The oxide material described above may be combined with another oxide such as for example: manganese dioxide, (MnO₂), iron oxide, copper oxide, nickel oxide, lithium-manganese composite oxides (for instance LiₓMn₂O₄ or LiₓMₙO₂), lithium-nickel composite oxides (for instance LiₓNiO₂), lithium-cobalt composite oxides (for instance LiₓCoO₂), lithium-nickel-cobalt composite oxides (for instance LiNi_{1-y}Co_{y}O₂), composite oxides of lithium and a transition metal, lithium-manganese-nickel composite oxides with a spinel structure (for instance LiₓMn_{2-y}Ni_{y}O₄), vanadium oxides, NMC and NCA oxides that do not have a high content of nickel, and mixtures thereof. In some embodiments, the NMC or NCA oxides having a high content of nickel accounts for at least 50 % by weight, preferably at least 75 % by weight, more preferably at least 90 % by weight, more preferably essentially the totality of the oxide material present in the (preferably positive) electrode as the electrochemically active material. Alternatively, or additionally, the other electrode may comprise sulfur, Li₂S, O₂, and/or LiO₂ as an electrochemically active material.

The other electrode may comprise an electronically conductive material and/or may comprise a binder. The electronically conductive material and the binder may be as described above.

The electrochemical cell may comprise a separator. The separator may be a porous polymer film. As non-limitative examples, the separator may consist of a porous film of polyolefin such as ethylene homopolymers, propylene homopolymers, ethylene/butene copolymers, ethylene/hexene copolymers, ethylene/methacrylate copolymers, or multilayer structures of the above polymers.

The invention also pertains to a battery comprising at least one, and preferably several, electrochemical cells as described above. The electrochemical cells may be arranged in series and/or in parallel in the battery.

### Examples

The following examples illustrate the invention without limiting it.

### Example 1 (comparative example)

### Preparation of the electrodes

Negative electrodes made of a foil of lithium metal were subjected to the following treatments:
- Electrode 1: A solution of 1 wt.% of Piezotech® FC-20 (a P(VDF-TrFE) copolymer, having a (VDF:TrFE) molar composition of (80:20), commercialized by ARKEMA)) in THF (anhydrous 99.9 %, inhibitor free) was prepared and printed (ink jet printing) onto the surface of the electrode to obtain a film having a thickness lower than 1 µm.
- Electrode 2: A solution of 1 wt.% of a P(VDF-TrFE-CTFE) terpolymer, having a (VDF:TrFE:CTFE) molar composition of (62:30:8) (manufactured according to the process described in WO 2014/162080A1), in THF (anhydrous 99.9 %, inhibitor free) was prepared and printed (ink jet printing) onto the surface of the electrode to obtain a film having a thickness lower than 1 µm.
- Electrode 3: bare negative electrode made of a foil of lithium metal (no treatment).

### Tests

Each electrode was placed into an electrochemical pouch cell (incorporating several positive electrodes (comprising sulfur as the electrochemically active material) and negative electrodes).

The specific capacity and the coulombic efficiency of the cells were measured over a number of cycles. Cells underwent galvanostatic cycling where they were discharged to 1.9 V and charged to 2.6 V at a rate of C/10, the current density was 0.4 mA/cm² The cells were kept at 20 °C throughout cycling. The results are shown in **figures 1** and **2**.

The cells containing a negative electrode coated with a polymer film showed a rapid reduction in coulombic efficiency resulting in a premature cell failure. This coulombic efficiency decrease occurs probably through an interaction between the polymer on the electrode surface and the active material of the positive electrode (sulfur) or polysulfides in solution after dissolution of said polymer in the electrolyte. However, the Li-electrodes coated by a polymer film exhibited some desirable areas of dense lithium growth (as observed on SEM (scanning electron microscope) images taken after the cell failure).

### Example 2 (comparative example)

### Preparation of the electrodes

Negative electrodes made of a foil of lithium metal were subjected to the following treatments:
- Electrode 1: A solution of 1 wt.% of P(VDF-TrFE) (80/20 %mol) (Piezotech® FC-20) in THF (anhydrous 99.9 %, inhibitor free) was prepared. The electrode was soaked in said solution and left to soak for 7 days. Then, the electrode was thoroughly washed with anhydrous THF.
- Electrode 2: A solution of 1 wt.% of P(VDF-TrFE-CTFE) (62/30/8 %mol) in THF (anhydrous 99.9 %, inhibitor free) was prepared. The electrode was soaked in said solution and left to soak for 7 days. Then, the electrode was thoroughly washed with anhydrous THF.
- Electrode 3: A solution of 1 wt.% LiFSI and 1 wt.% of Piezotech® FC-20 in THF (anhydrous 99.9 %, inhibitor free) was prepared. The electrode was soaked in said solution and left to soak for 7 days. Then, the electrode was thoroughly washed with anhydrous THF.
- Electrode 4: A solution of 1 wt.% LiFSI and 1 wt.% of P(VDF-TrFE-CTFE) (62/30/8 %mol) in THF (anhydrous 99.9 %, inhibitor free) was prepared. The electrode was soaked in said solution and left to soak for 7 days. Then, the electrode was thoroughly washed with anhydrous THF.
- Electrode 5: The electrode was soaked in anhydrous THF and left to soak for 7 days.
- Electrode 6: A solution of 1 wt.% LiFSI in THF (anhydrous 99.9 %, inhibitor free) was prepared. The electrode was soaked in said solution and left to soak for 7 days. Then, the electrode was thoroughly washed with anhydrous THF.

### Observation of the electrodes

The electrodes, and in particular the potential SEI formed on said electrodes, were analyzed by SEM images and EDS (energy-dispersive X-ray spectroscopy) spectra and maps (analysis of C, O and F elements).

Both electrodes 5 and 6 showed little visible SEI formation and the surface chemistry of said electrodes consists predominantly of carbon and oxygen residues.

The EDS spectra of electrodes 1 and 2 were very similar to those of electrodes 5 and 6, although the presence of a small amount of fluorine can be noted.

Electrodes 3 and 4 exhibited an inhomogeneous deposit which is rich in fluorine as well as the inclusion of a small amount of sulfur. The deposits were only found on small areas of the electrode and appear to be inconsistent.

### Example 3

### Preparation of the electrodes

Negative electrodes made of a foil of lithium metal were subjected to the following treatments:
- Electrode 1 (example according to the invention): A solution of 1 wt.% LiFSI and 1 wt.% of Piezotech® FC-20 in THF (anhydrous 99.9 %, inhibitor free) was prepared and printed onto the surface of the electrode. The electrode was dried in a dry room (dew point of -50°C - -40°C) at room temperature for 1h to obtain a film having a thickness lower than 1 µm and stored under dry conditions for 7 days at room temperature. Then, the electrode was washed by being soaked in a bath of THF for 5 min and then rinsed with THF. The washed electrode was left to dry for 1h in a dry room at room temperature.
- Electrode 2 (example according to the invention): A solution of 1 wt.% LiFSI and 1 wt.% of P(VDF-TrFE-CTFE) (62/30/8 %mol) in THF (anhydrous 99.9 %, inhibitor free) was prepared and printed onto the surface of the electrode. The electrode was dried in a dry room (dew point of -50°C - - 40°C) at room temperature for 1h to obtain a film having a thickness lower than 1 µm and stored under dry conditions for 7 days at room temperature. Then, the electrode was washed by being soaked in a bath of THF for 5 min and then rinsed with THF. The washed electrode was left to dry for 1h in a dry room at room temperature.
- Electrode 3 (comparative example): A solution of 1 wt.% LiFSI and 1 wt.% of Piezotech® FC-20 in THF (anhydrous 99.9 %, inhibitor free) was prepared and printed onto the surface of the electrode. The electrode was dried in a dry room (dew point of -50°C - -40°C) at room temperature for 1h to obtain a film having a thickness lower than 1 µm and stored under dry conditions for 7 days at room temperature.
- Electrode 4 (comparative example): A solution of 1 wt.% LiFSI and 1 wt.% of P(VDF-TrFE-CTFE) (62/30/8 %mol) in THF (anhydrous 99.9 %, inhibitor free) was prepared and printed onto the surface of the electrode. The electrode was dried in a dry room (dew point of -50°C - -40°C) at room temperature for 1h to obtain a film having a thickness lower than 1 µm and stored under dry conditions for 7 days at room temperature.

### Observation of the electrodes

The electrodes, and in particular the potential SEI formed on said electrodes, were analyzed by SEM images and EDS spectra and maps (analysis of C, F and S elements).

Electrode 3 comprised a polymer film exhibiting crystals of LiFSI. Some LiFSI was also present in the polymer film in a lower concentration (as evidenced by the sulfur signal throughout the film in the EDS map). The LiFSI salt seemed to be only partially soluble in the Piezotech® FC-20 resulting in a solid solution of mostly Piezotech® FC-20 with a small amount of LiFSI. The excess LiFSI precipitated and formed the observed crystals.

Electrode 1 showed no LiFSI crystal. The excess of LiFSI was washed by THF, which suggests that the crystals only form on top of the film. Electrode 1 exhibited a continuous and homogeneous covering of fluorine, sulfur and carbon atoms, demonstrating that a new SEI formed after removal of the excess polymer and salt. The atomic ratio of carbon, fluorine and sulfur of the SEI was 1 C : 0.63 F : 0.15 S (as measured *via* EDS spectra).

Electrode 4 showed a morphology similar to that of electrode 3 but the LiFSI crystals appeared to be finer and smaller. This is most likely the result of an improved interaction and lower interfacial energy between the P(VDF-TrFE-CTFE) and LiFSI compared to Piezotech® FC-20.

On electrode 2, some islands of polymer could be seen in the SEM images. However, below the polymer islands, there appeared to be a continuous and homogenous SEI, evident by the carbon, fluorine and sulfur signals in the EDS map. The atomic ratio of carbon, fluorine and sulfur of the SEI was 1 C : 0.21 F : 0.06 S (as measured *via* EDS spectra).

### Tests

Each electrode was placed into an electrochemical pouch cell. The positive electrode comprises sulfur as the electrochemically active material. A reference cell comprising a bare negative electrode in lithium metal was also prepared.

The specific capacity and the coulombic efficiency of the cells were measured over a number of cycles. The capacity retention (i.e. the percentage of BOL (beginning of life) capacity) over a number of cycles was also determined. Cells underwent galvanostatic cycling where they were discharged to 1.9 V and charged to 2.6 V at a rate of C/10, the current density was 0.4 mA/cm². The cells were kept at 20 °C throughout cycling. The results are shown in **figures 3, 4** and **5****,** as well as in the following table.

| **Cell** | **Coulombic efficiency at cycle 20 (%)** | **Average coulombic efficiency (%)** | **Total charge capacity (Ah)** | **Total discharge capacity (Ah)** | **Total capacity (CC + DC) (Ah)** |
|---|---|---|---|---|---|
| having electrode 1 | 98.63 | 97.75 | 27.17 | 26.56 | 53.73 |
| having electrode 3 | 89.93 | 84.96 | 16.82 | 14.29 | 31.11 |
| having electrode 2 | 98.71 | 97.75 | 26.77 | 26.17 | 52.94 |
| having electrode 4 | 80.58 | 86.49 | 11.03 | 9.54 | 20.57 |
| reference | 98.38 | 97.35 | 27.56 | 26.83 | 54.39 |

The use of electrode 3 and electrode 4 resulted in a poor coulombic efficiency (**figure 4** and above table) and an early cell failure. The reduction in coulombic efficiency is thought to be a result of the polymers interaction with the sulfur contained in the positive electrode and/or the polysulfide species dissolved in the electrolyte.

The cells comprising electrode 1 and electrode 2 showed a better performance than that of the reference cell. Indeed, each of the cells comprising electrode 1 and electrode 2 exhibited a better coulombic efficiency to that of the reference cell (**figure 4** and above table). An improvement of +0.4 % in the average coulombic efficiency can be significant in terms of cycle life. In addition, the cells comprising electrode 1 and electrode 2 exhibited a similar total capacity to that of the reference cell. The cells failed by reaching the 80 % beginning of life (BOL) cut off, a mode of failure most frequently associated with electrolyte drying.

### Post-mortem analyses

After cell failure, the electrodes were visually inspected.

On deconstruction of the cells, it was noted that each cell appeared very dry, confirming that cell failure was caused by electrolyte degradation. Thus, a higher electrolyte loading would have been required to prevent cell failure by electrolyte drying and force cell failure by electrode deterioration, to show any benefit from the electrodes according to the invention on the cycle life over the reference cell.

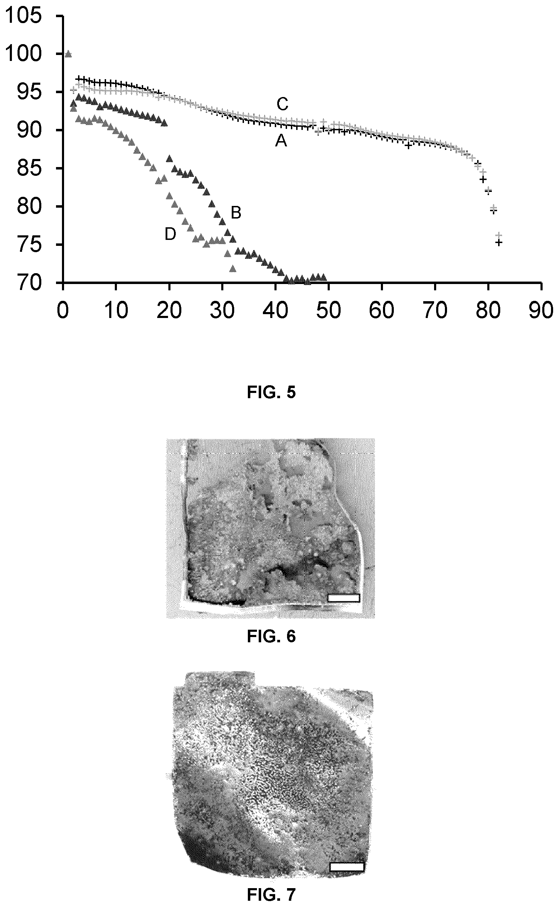

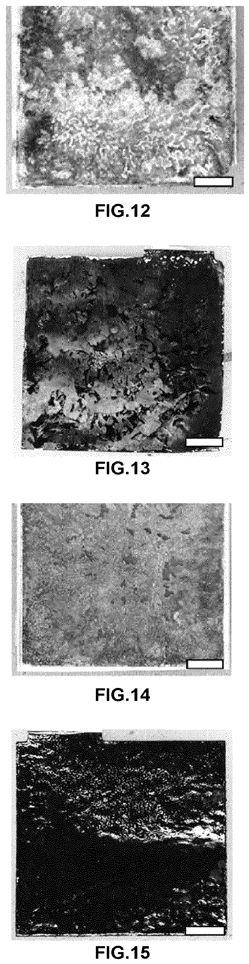

Images of the negative and positive electrodes of each cell after post-mortem analysis are shown in **figures 6** to **15****.**

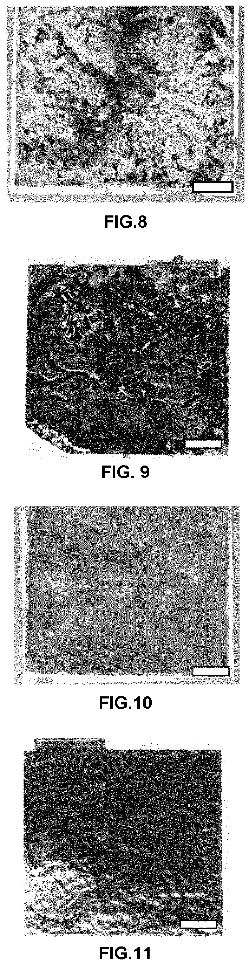

As for the cells comprising electrodes 3 and 4, an inconsistent activity could be clearly seen on the negative electrode and the positive electrode (**figures 8, 9****,** **12** and **13**). Negative electrodes 3 and 4 held much of their structure, but this was a result of the low cycle life (less than 30 cycles).

The comparison of negative electrodes 1 and 2 with the negative electrode of the reference cell highlighted that electrodes 1 and 2 maintained a greater degree of structural integrity than the negative electrode of the reference cell (**figures 6****,** **10** and **14**), suggesting that a longer lithium stripping/plating cycle life could be achievable (with a sufficient amount of electrolyte).

## Claims

1. A method for modifying an electrode comprising an alkali metal, comprising:
- casting a salt solution comprising at least one salt comprising an alkaline ion and a solvent on the electrode;
- casting a fluoropolymer solution comprising at least one fluoropolymer and a solvent on the electrode;
- drying the electrode;
- washing the electrode with a washing composition comprising a solvent.

2. The method of claim 1, wherein the at least one salt comprises at least one fluorine atom.

3. The method of claim 1 or 2, wherein the steps of casting a salt solution and of casting a fluoropolymer solution are carried out simultaneously, by casting a salt fluoropolymer solution comprising the at least one salt, the at least one fluoropolymer, and a solvent, on the electrode.

4. The method of any one of claims 1 to 3, wherein the alkali metal of the electrode is lithium metal and wherein the alkaline ion of the salt is a lithium ion; or
wherein the alkali metal of the electrode is sodium metal and wherein the alkaline ion of the salt is a sodium ion.

5. The method of claim 4, wherein the salt comprising a lithium ion is selected from the group consisting of LiFSI, LiTFSI, LiPF₆, LiDFOB, LiBOB, LiBF₄ and mixtures thereof, preferably the salt is LiFSI.

6. The method of any one of claims 1 to 5, wherein the at least one fluoropolymer is selected from the group consisting of polyvinylidene fluoride homopolymers and copolymers comprising vinylidene fluoride units and units from one or more other monomers chosen from vinyl fluoride; trifluoroethylene; chlorotrifluoroethylene; 1,2-difluoroethylene, tetrafluoroethylene; bromotrifluoroethylene; chlorofluoroethylene; hexafluoropropylene; perfluoro(alkyl vinyl)ethers such as perfluoro(methyl vinyl)ether, perfluoro(ethyl vinyl)ether or perfluoro(propyl vinyl)ether; perfluoro(1,3-dioxole); perfluoro(2,2-dimethyl-1,3-dioxole); the product of formula CF₂=CFOCF₂CF(CF₃)OCF₂CF₂X in which X is SO₂F, CO₂H, CH₂OH, CH₂OCN or CH₂OPO₃H; the product of formula CF₂=CFOCF₂CF₂SO₂F; the product of formula F(CF₂)ₙCH₂OCF=CF₂ in which n is 1, 2, 3, 4 or 5; the product of formula R'CH₂OCF=CF₂ in which R' is hydrogen or F(CF₂)_{z} and z is 1, 2, 3 or 4; the product of formula R"OCF=CH₂ in which R" is F(CF₂)_{z} and z is 1, 2, 3 or 4; (perfluorobutyl)ethylene; tetrafluoropropene; chlorotrifluoropropene; pentafluoropropene; trifluoropropene such as 3,3,3-trifluoropropene and 2-trifluoromethyl-3,3,3-trifluoro-1-propene;
preferably the fluoropolymer is selected from the group consisting of polyvinylidene fluoride homopolymers, poly(vinylidene fluoride-*co-*hexafluoropropylene), poly(vinylidene fluoride-*co*-trifluoroethylene), poly(vinylidene fluoride-*ter*-trifluoroethylene-*ter-*chlorofluoroethylene), poly(vinylidene fluoride-*ter*-trifluoroethylene-*ter*-chlorotrifluoroethylene), poly(vinylidene fluoride-*ter-*trifluoroethylene-*ter*-hexafluoropropylene) and mixtures thereof.

7. The method of any one of claims 1 to 6, wherein the fluoropolymer is an electroactive polymer;
preferably wherein the fluoropolymer is a ferroelectric or a relaxor ferroelectric.

8. The method of any one of claims 1 to 7, wherein the at least one fluoropolymer is a poly(vinylidene fluoride-trifluoroethylene and/or tetrafluoroethylene), preferably a poly(vinylidene fluoride-co-trifluoroethylene), having a molar content of vinylidene fluoride units of from 25 to 95 %, preferably from 55 to 80 %, and a molar content of trifluoroethylene and/or tetrafluoroethylene units of from 5 to 75 %, preferably from 20 to 45 %; or the at least one fluoropolymer is a poly(vinylidene fluoride-trifluoroethylene and/or tetrafluoroethylene-chlorofluoroethylene and/or chlorotrifluoroethylene), preferably a poly(vinylidene fluoride-*ter*-trifluoroethylene-*ter-*chlorofluoroethylene) or a poly(vinylidene fluoride-*ter-*trifluoroethylene-ter- chlorotrifluoroethylene), having a molar content of vinylidene fluoride units of from 25 to 80 %, preferably from 35 to 70 %, a molar content of trifluoroethylene and/or tetrafluoroethylene units of from 3 to 60 %, preferably from 14 to 40 %, and a molar content of chlorofluoroethylene and/or chlorotrifluoroethylene units of from 2 to 20 %, preferably from 3 to 15 %, more preferably from 4 to 12 %.

9. The method of any one of claims 1 to 8, wherein the solvent of the salt solution is an ether, preferentially tetrahydrofuran, dimethoxyethane, dioxolane, diglyme, triglyme, tetraglyme and/or fluoro-ethers, even more preferably tetrahydrofuran;
and/or the solvent of the fluoropolymer solution is an ether, preferably tetrahydrofuran, dimethoxyethane, dioxolane, diglyme, triglyme, tetraglyme and/or fluoro-ethers, even more preferably tetrahydrofuran;
and/or the solvent of the washing composition an ether, preferably tetrahydrofuran, dimethoxyethane, dioxolane, diglyme, triglyme, tetraglyme and/or fluoro-ethers, even more preferably tetrahydrofuran.

10. The method of any one of claims 1 to 9, wherein the casting steps are simultaneously or independently carried out by spin-coating, spray coating, bar coating, slot-die coating, dip coating, roll-to-roll printing, screen-printing, flexographic printing, lithographic printing, ink-jet printing, film stretching (such as the contactless Doctor-Blade method or the Meyer bar method with contact), preferably the casting steps are carried out by printing such as roll-to-roll printing, screen-printing, flexographic printing, lithographic printing or ink-jet printing;
and/or the casting steps are carried out so as to form a film having a total thickness lower than or equal to 3 µm, preferably lower than or equal to 1 µm, on the electrode after the drying of the electrode.

11. An electrode obtainable by the method of any one of claims 1 to 10.

12. An electrode comprising an alkali metal at least partly covered by a solid electrolyte interphase, said solid electrolyte interphase having atomic ratios of carbon, fluorine and sulfur atoms of 1 C : 0.15 to 0.80 F: 0.02 to 0.30 S, preferably 1 C : 0.20 to 0.80 F : 0.02 to 0.30 S, more preferably of 1 C : 0.35 to 0.70 F : 0.03 to 0.25 S, more preferably of 1 C : 0.40 to 0.65 F : 0.04 to 0.22 S.

13. The electrode of claim 11 or 12, or the method of any one of claim 1 to 10, wherein the electrode is a negative electrode.

14. The electrode of any one of claims 11 to 13 or the method of any one of claim 4 to 10, wherein the alkali metal is lithium or sodium, preferably lithium, more preferably the electrode is a film of lithium metal or of an alloy comprising lithium, even more preferably the electrode is a film of lithium metal.

15. An electrochemical cell comprising a first electrode according to any one of claims 11 to 14, a second electrode, which is preferably a positive electrode, and an electrolyte.

16. A battery comprising at least one electrochemical cell according to claim 15.
